# EUROPEAN PATENT APPLICATION

(11) **EP 4 803 879 A1**
(43) Date of publication of application: **09.09.2026**
(21) Application number: 24897552.6
(22) Date of filing: 26.11.2024
(51) Int. Cl.: G01N 1/00, A61J 1/20, G01N 1/10

(54) **COLLECTING KIT**

(30) Priority: 28.11.2023 JP 2023200650
(71) Applicant: Terumo Kabushiki Kaisha, Tokyo 151-0072 (JP)
(72) Inventor: OKABE, Hiroshi, Fujinomiya-shi, Shizuoka 418-0004 (JP)
(74) Representative: TBK
(86) International application number: PCT/JP2024/041857
(87) International publication number: WO 2025/115868

(57) **Abstract**

A collection member (14A) of a collection kit (10A) includes a plurality of storage portions (22) and a reservoir portion (58). The plurality of storage portions (22) includes a plurality of storage chambers (24), and the reservoir portion (58) includes a reservoir chamber (60). The reservoir chamber (60) is connected to at least one of the plurality of storage chambers (24) via a guide path (54). The reservoir chamber (60) stores air moved from the plurality of storage chambers (24) when an object of collection is stored in the plurality of storage chambers (24).

## Description

### Technical Field

The present disclosure relates to a collection kit for transferring an object of collection (mainly liquid medicine) stored in a medical bag to a plurality of sampling containers.

### Background Art

Blood products include a red blood cell product, a plasma product, a platelet product, and a whole blood product. In order to ensure safety of the blood products, a small amount of sample may be collected from the blood products and subjected to a culture test. In the culture test, the sample is collected in a culture bottle (sampling container), and the culture bottle is placed in an environment suitable for bacterial growth to detect the presence or absence of a pathogen.

Hereinafter, an operation procedure of transferring, for example, a platelet product, which is stored in a medical bag (hereinafter referred to as platelet bag), to two culture bottles from the platelet bag will be described.

A small volume collection bag is connected to the platelet bag, and a part of the platelet product in the platelet bag is transferred to the collection bag. The collection bag is then disconnected from the platelet bag. Next, in a clean bench, the collection bag is connected to a tube extending from a sample collection tube, and a prescribed amount of the platelet product is transferred from the collection bag to the sample collection tube with reference to scales of the sample collection tube. Thereafter, two culture bottles are sequentially connected to the sample collection tube, and a prescribed amount of the platelet product is transferred to the two culture bottles. One of the two culture bottles is a culture bottle subjected to anaerobic culture, and the other is a culture bottle subjected to aerobic culture.

For example, US 8777921 discloses a collection kit for collecting a sample from a medical bag.

### Citation List

### Patent Literature

Patent Literature 1: US 8777921

### Summary of Invention

From the viewpoint of further improving the safety of blood products, culture tests for all blood products have been studied. Therefore, it is required to improve the work efficiency of the culture test for the blood product. In addition, in a case where the culture test is performed on all blood products, it is desirable that an instrument for dispensing the blood product into the culture bottle has a simple structure. In addition, it is desirable that a predetermined amount of an object of collection can be collected in each of the plurality of sampling containers.

An object of the present disclosure is to solve the above-described problem.
(1) An aspect of the present disclosure provides a collection kit for collecting an object of collection contained in a medical bag into a plurality of sampling containers, the collection kit comprising: an inflow tube to which the medical bag is connected; and a collection member connected downstream of the inflow tube, wherein the collection member includes a plurality of storage portions including a plurality of storage chambers for storing the object of collection, at least one outflow port connected to the plurality of storage chambers for transferring the object of collection to the plurality of sampling containers from the plurality of storage portions, and a reservoir portion connected to at least one of the plurality of storage portions via a guide path and including a reservoir chamber that stores air moved from the plurality of storage portions when the object of collection is stored in the plurality of storage portions, and the reservoir portion is made of a material expandable in response to the movement of the air from the plurality of storage portions.
   The reservoir portion is expandable, and thus, when air moves from the plurality of storage portions to the reservoir portion, the reservoir chamber can receive the air. Since the air is stored in the reservoir portion, it is not necessary to provide an air filter for exhausting the air outside the collection member. Thus, the configuration of the collection member is simplified.
(2) The collection kit according to (1) may further include a backflow prevention unit that is disposed in the guide path and prevents the air stored in the reservoir chamber from returning to the plurality of storage chambers.
   For example, when the object of collection is transferred from the plurality of storage portions to the sampling container, the air stored in the reservoir chamber is prevented from returning to the plurality of storage portions. Therefore, the object of collection is prevented from coming into contact with air. Thus, the object of collection can be subjected to a culture examination.
(3) In the collection kit according to (2), the backflow prevention unit may include a hydrophilic filter disposed inside the guide path.
   The hydrophilic filter allows the passage of air before being wetted by the object of collection that is a liquid, and blocks the passage of air after being wetted by the object of collection. Therefore, this configuration can prevent the air stored in the reservoir portion from returning to the storage chamber through the hydrophilic filter due to the object of collection overflowing from the plurality of storage portions and wetting the hydrophilic filter.
(4) In the collection kit according to (2), the backflow prevention unit may include a clamp that squeezes the guide path from outside.
   In this configuration, the clamp is only attached to the outside of a sheet portion after the object of collection moves from the medical bag to the plurality of storage chambers. Therefore, the configuration of the collection kit is simplified.
(5) In the collection kit according to any one of (1) to (4), the collection member may include a sheet portion formed by stacking and welding two flexible sheets, the reservoir chamber may be formed as an inner chamber of the sheet portion, and each of the plurality of storage portions may be formed of an inflexible material and supported by the sheet portion.

Each of the plurality of storage portions exhibits inflexibility. Note that "the storage portion exhibits inflexibility" means that the storage portion has rigidity to such an extent that the storage portion is not substantially deformed when the object of collection flows into the storage chamber and when the object of collection flows out from the storage chamber to the sampling container. That is, each of the plurality of storage portions is hard to such an extent that it does not exhibit flexibility.

Therefore, according to the above configuration, when air is discharged from each of the storage chambers to the reservoir chamber, deformation of the plurality of storage portions is suppressed. Thus, substantially the same amount of the object of collection is transferred from the medical bag to each of the storage chambers. That is, the storage amount of the object of collection in each storage chamber is made constant. Therefore, the sampling amount of the object of collection in the sampling container is stabilized.

(6) In the collection kit according to (5), a material of each of the plurality of storage portions may be a resin.

Since the resin is lightweight, the weight of the collection kit can be reduced. Moreover, the resin is hard.

(7) In the collection kit according to any one of (1) to (4), the collection member may include a sheet portion formed by stacking and welding two flexible sheets, the sheet portion may include the plurality of storage portions, and the plurality of storage chambers and the reservoir chamber may be individually formed as inner chambers of the sheet portion.

When the sheet portion is formed from the two flexible sheets, the plurality of storage chambers and the reservoir chamber can be simultaneously formed. Therefore, the work of manufacturing the plurality of storage portions is simplified. Further, since the material of the sheet portion forming the reservoir portion and the plurality of storage portions is a flexible sheet, the material cost can be reduced.

(8) The collection kit according to any one of (1) to (7) may further include an adapter connected downstream of the outflow port.

Due to the adapter, the storage portions and the sampling containers can be easily connected via the outflow port. In addition, since the collection kit before being used includes the adapter, it is possible to save time and effort for the operator to connect the adapter to the outflow port one by one when using the collection kit. As a result, efficient collection operation can be achieved.

(9) In the collection kit according to any one of (1) to (8), the collection member may include a plurality of the reservoir portions, and the reservoir chambers of the plurality of reservoir portions may be connected to the plurality of storage chambers, respectively.

In this configuration, the air exhausted from one storage chamber is transferred to one reservoir chamber. In other words, there is no chance that the air exhausted from two or more storage chambers is stored in one reservoir chamber. Therefore, the volume of each reservoir chamber can be reduced. Thus, it is possible to downsize each of the plurality of reservoir portions.

(10) In the collection kit according to any one of (1) to (9), the plurality of storage portions may be arranged from an upstream side to a downstream side in a flowing direction of the object of collection, and the reservoir chamber may be connected to the storage chamber of the storage portion positioned most downstream.

This makes it sufficient to form only one guide path and only one reservoir chamber in the collection member, whereby the configuration of the collection member is simplified.

In the present disclosure, the air moved from the plurality of storage chambers is stored in the reservoir portion. Therefore, an air filter for exhausting air to the outside of the collection member is unnecessary. Thus, the configuration of the collection member is simplified.

### Brief Description of Drawings

[Fig. 1] Fig. 1 is a schematic front view of a collection kit according to a first embodiment of the present disclosure as viewed from a thickness direction.
[Fig. 2] Fig. 2 is a schematic front view of a collection member constituting the collection kit in Fig. 1 as viewed from the thickness direction.
[Fig. 3] Fig. 3 is a schematic front view illustrating a state in which a medical bag is connected to the collection kit.
[Fig. 4] Fig. 4 is a schematic front view illustrating a state in which a sampling container is connected to the collection kit via an adapter and an object of collection is transferred to the sampling container.
[Fig. 5] Fig. 5 is a schematic front view of a collection kit according to a second embodiment of the present disclosure as viewed from a thickness direction.
[Fig. 6] Fig. 6 is a schematic front view of a collection kit according to a third embodiment of the present disclosure as viewed from a thickness direction.
[Fig. 7] Fig. 7 is a front view illustrating a periphery of an outflow port in a collection kit according to a modification.

### Description of Embodiments

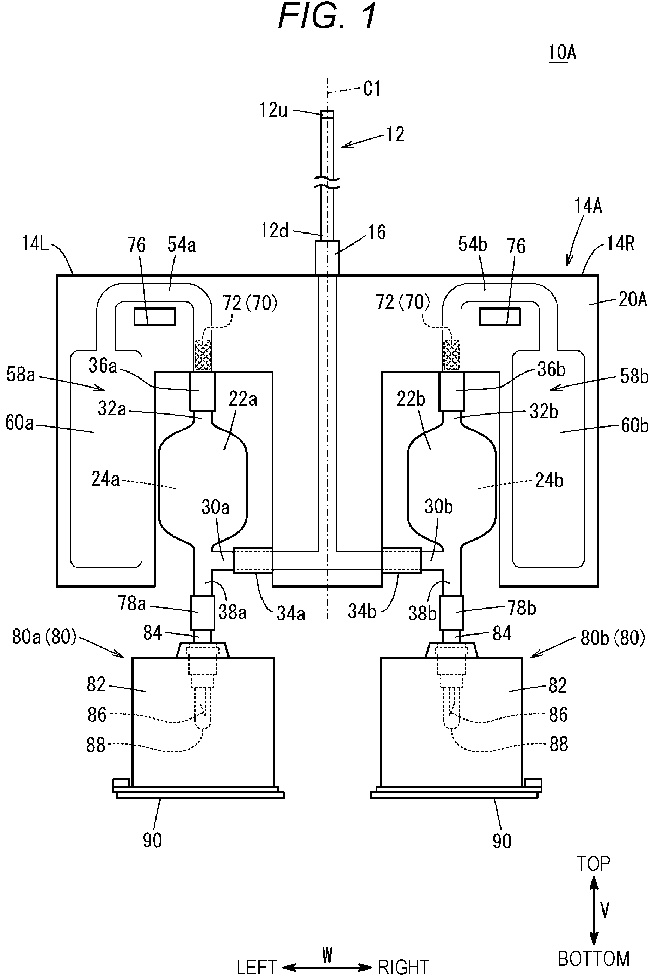

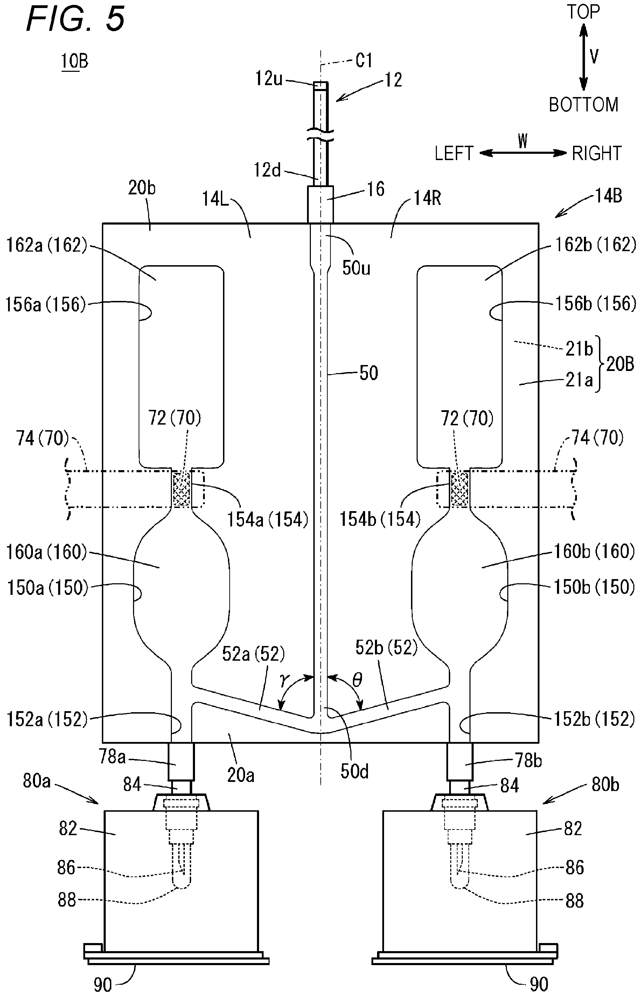

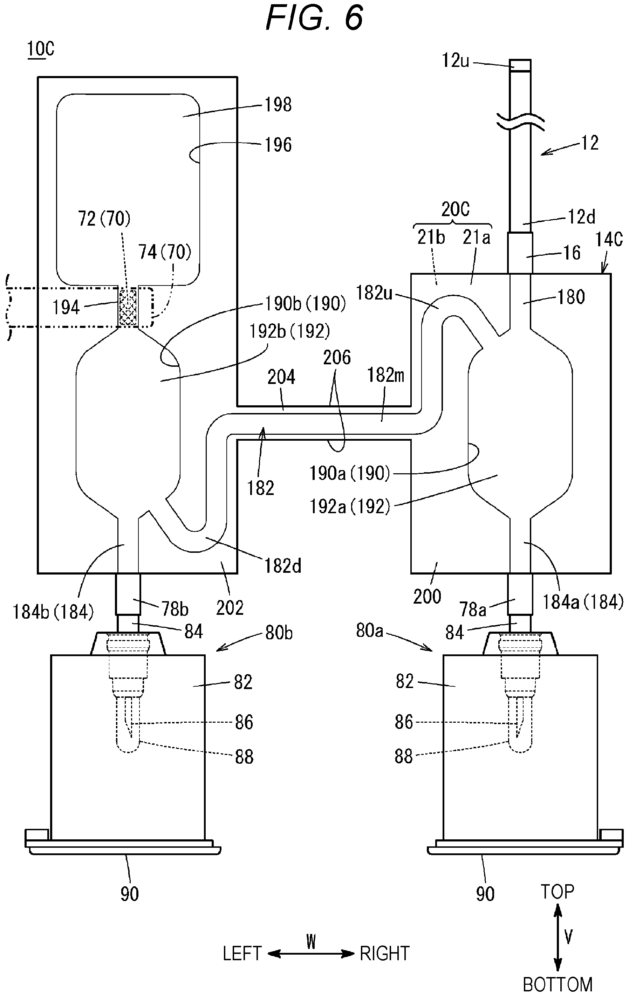

The top, bottom, left, and right in the following description correspond to the top, bottom, left, and right in Figs. 1 to 7, respectively. In addition, "width direction" refers to the left-right direction in Figs. 1 to 7. The "thickness direction" refers to a direction orthogonal to the top-bottom (V) direction and the width (W) direction. A collection kit 10A illustrated in Figs. 1 to 4, a collection kit 10B illustrated in Fig. 5, and a collection kit 10C illustrated in Fig. 6 are typically used in a posture in which the top-bottom direction in Figs. 1 to 6 is aligned with the vertical direction.

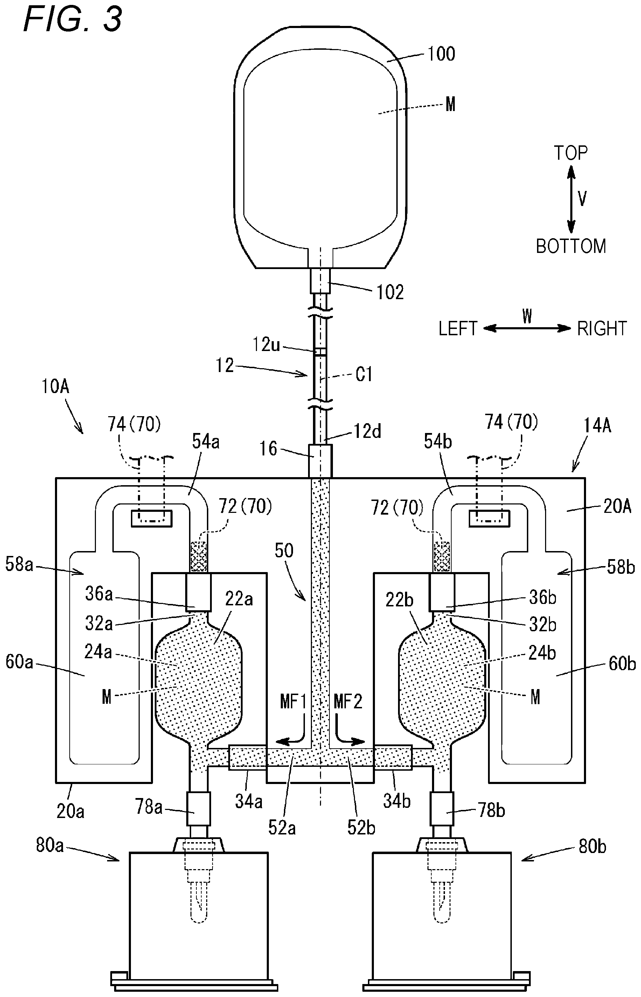

An object of collection to be collected by the collection kit 10A illustrated in Figs. 1 to 4 is, for example, a blood product such as a platelet product. The object of collection may be a medicine other than a blood product. The object of collection may be a liquid sample other than a medicine. A medical bag 100 (see Fig. 3) may be a blood bag system for centrifugally separating blood containing a plurality of components into a plurality of components (for example, three components which are a light specific gravity component, a medium specific gravity component, and a heavy specific gravity component, or two components which are a light specific gravity component and a heavy specific gravity component) having different specific gravities, and separately accommodating and storing the components in different bags. In this case, the collection kit 10A may be connected to the blood bag system. The same applies to the collection kit 10B illustrated in Fig. 5 and the collection kit 10C illustrated in Fig. 6.

In all embodiments, an example of using a platelet product M (see Fig. 3) as the blood product will be described. Alternatively, the blood product to be collected by the collection kits 10A to 10C may be a red blood cell product, a plasma product, or a whole blood product.

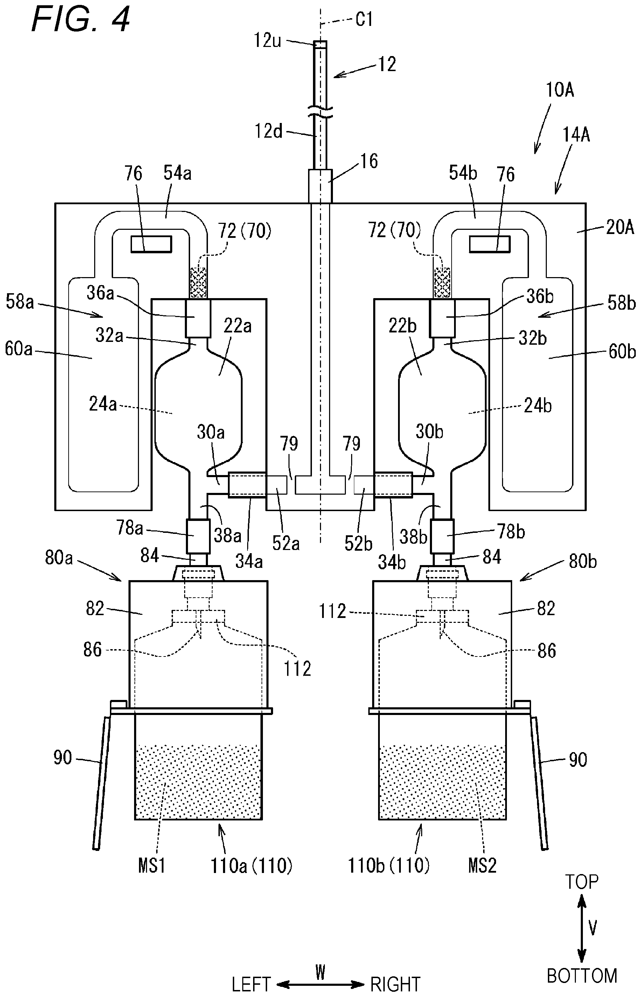

The collection kit 10A (see Figs. 1 to 4), the collection kit 10B (see Fig. 5), and the collection kit 10C (see Fig. 6) are used, for example, in a culture examination for confirming the safety of a blood product at a business place such as a blood center where blood products are produced. In this case, a plurality of sampling containers 110 (a first sampling container 110a and a second sampling container 110b) illustrated in Fig. 4 is culture bottles.

In the culture examination, an examination for anaerobic culture and an examination for aerobic culture are performed. Therefore, in the culture examination, the first sampling container 110a for anaerobic culture and the second sampling container 110b for aerobic culture are used. The collection kits 10A to 10C are used to collect a liquid sample (platelet product M) and dispense a prescribed amount into the first sampling container 110a and the second sampling container 110b.

Fig. 1 is a schematic front view of the collection kit 10A according to a first embodiment. The collection kit 10A includes an inflow tube 12 and a collection member 14A.

The inflow tube 12 is, for example, a transparent or semi-transparent medical tube made of a thermoplastic resin such as a vinyl chloride resin. The inflow tube 12 can be connected to or separated from another medical tube without exposing the inside thereof to outside air by using a sterile connecting device, a tube sealer, or the like. The inflow tube 12 has an upstream end 12u and a downstream end 12d. In an unused state in which the collection kit 10A is provided as a product, the upstream end 12u is welded and sealed. Hereinafter, the unused state is also referred to as an "initial state".

The downstream end 12d is connected to an upper side 20b of a sheet portion 20A (described later) constituting the collection member 14A via an inflow port 16. As illustrated in Fig. 3, when the platelet product M contained in the medical bag 100 is transferred to the collection member 14A, the medical bag 100 is connected to the upstream end 12u of the inflow tube 12.

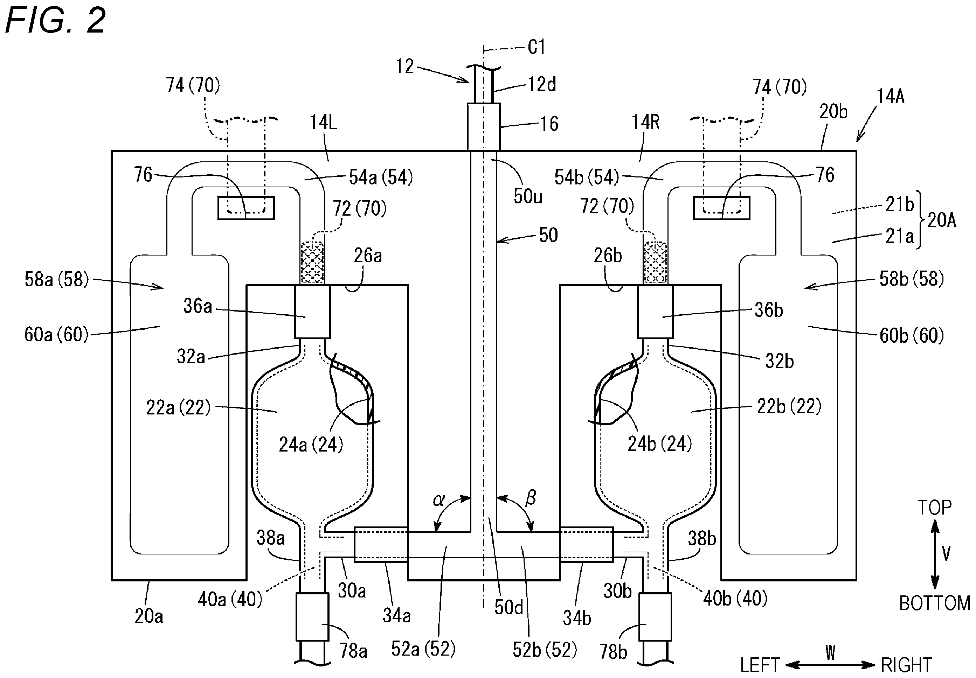

As illustrated in detail in Fig. 2, the collection member 14A includes the sheet portion 20A and a plurality of storage portions 22. In the illustrated example, the plurality of storage portions 22 includes a first storage portion 22a and a second storage portion 22b. That is, the number of the plurality of storage portions 22 is two. However, the number of the plurality of storage portions 22 may be three or more.

The sheet portion 20A has a first notch 26a formed in a left part 14L of the collection member 14A and a second notch 26b formed in a right part 14R of the collection member 14A. The first notch 26a and the second notch 26b extend upward and in the width direction starting from a lower side 20a of the sheet portion 20A. The first storage portion 22a is placed in the first notch 26a, and the second storage portion 22b is placed in the second notch 26b. The first storage portion 22a is connected to the sheet portion 20A with a first introduction tube portion 30a and a first discharge tube portion 32a. The first introduction tube portion 30a is connected to the sheet portion 20A via a first introduction port 34a, and the first discharge tube portion 32a is connected to the sheet portion 20A via a first discharge port 36a. The second storage portion 22b is connected to the sheet portion 20A with a second introduction tube portion 30b and a second discharge tube portion 32b. The second introduction tube portion 30b is connected to the sheet portion 20A via a second introduction port 34b, and the second discharge tube portion 32b is connected to the sheet portion 20A via a second discharge port 36b. Based on the above connection, the first storage portion 22a and the second storage portion 22b are supported by the sheet portion 20A.

The first storage portion 22a is a hollow body and has a first storage chamber 24a therein. The second storage portion 22b is also a hollow body and has a second storage chamber 24b therein. That is, the plurality of storage portions 22 includes a plurality of storage chambers 24.

The first storage portion 22a and the second storage portion 22b are storage regions for temporarily storing the platelet product M to be transferred to the first sampling container 110a and the second sampling container 110b illustrated in Fig. 4, respectively. The first storage chamber 24a and the second storage chamber 24b each have a volume enough to store an amount of, for example, about 8 mL to 10 mL of the platelet product M. The volume of the first storage chamber 24a and the volume of the second storage chamber 24b are substantially equal to each other, for example. The volume of the first storage chamber 24a and the volume of the second storage chamber 24b may be different from each other. In the initial state of the collection kit 10A, air is present in the first storage chamber 24a and the second storage chamber 24b.

The first storage portion 22a and the second storage portion 22b have a first outflow tube portion 38a and a second outflow tube portion 38b, respectively. The first outflow tube portion 38a has a first outflow path 40a therein, and the second outflow tube portion 38b has a second outflow path 40b therein.

The first outflow tube portion 38a extends downward from the lower part of the first storage portion 22a. The first introduction tube portion 30a extends from a right part of the first outflow tube portion 38a toward an upper part of the first outflow path 40a. An inner hole (not illustrated) of the first introduction tube portion 30a communicates with the first storage chamber 24a via the first outflow path 40a. The first discharge tube portion 32a extends upward from the upper part of the first storage portion 22a. The first storage chamber 24a communicates with a first reservoir chamber 60a via the first outflow path 40a, the first discharge port 36a, and a first guide path 54a. The first guide path 54a and the first reservoir chamber 60a will be described later.

The second outflow tube portion 38b extends downward from the lower part of the second storage portion 22b. The second introduction tube portion 30b extends from a left part of the second outflow tube portion 38b toward an upper part of the second outflow path 40b. An inner hole of the second introduction tube portion 30b communicates with the second storage chamber 24b via the second outflow path 40b. The second discharge tube portion 32b extends upward from the upper part of the second storage portion 22b. The second storage chamber 24b communicates with a second reservoir chamber 60b via the second outflow path 40b, the second discharge port 36b, and a second guide path 54b. The second guide path 54b and the second reservoir chamber 60b will be described later.

The first storage portion 22a and the second storage portion 22b configured as described above are inflexible. Specifically, the first storage portion 22a is hard enough not to substantially deform when the platelet product M flows into the first storage chamber 24a from the medical bag 100 and when the platelet product M flows out from the first storage chamber 24a toward the first sampling container 110a. Similarly, the second storage portion 22b is hard enough not to substantially deform under the above circumstances.

The first storage portion 22a and the second storage portion 22b are preferably transparent or translucent. In this case, an operator can easily visually confirm how much the platelet product M is stored in the first storage chamber 24a and the second storage chamber 24b. In addition, the operator can easily visually confirm how much the platelet product M has flowed out from the first storage chamber 24a and the second storage chamber 24b.

Preferable examples of the material satisfying the above conditions include a resin. Resin is lightweight, is hardly damaged, and is easily processed, and thus, is suitable as a material of the first storage portion 22a and the second storage portion 22b. The material of the first storage portion 22a and the second storage portion 22b may be glass.

The sheet portion 20A includes two flexible sheets 21a and 21b stacked in the thickness direction. Therefore, the sheet portion 20A is soft enough to allow a plurality of reservoir chambers 60 (described later) to expand when air flows into the plurality of reservoir chambers 60. The sheet portion 20A includes a plurality of reservoir portions 58. The outer surfaces of the plurality of reservoir portions 58 are defined by outer surfaces of the two flexible sheets 21a and 21b. Note that it is not necessary for the sheet portion 20A to have two flexible sheets 21a and 21b. The sheet portion 20A may be formed by accommodating a bag-shaped storage portion 22 and a bag-shaped reservoir portion 58.

The two flexible sheets 21a and 21b are stacked and partially welded. In the unwelded section, a common flow path 50, a plurality of connection flow paths 52, a plurality of guide paths 54, and a plurality of reservoir chambers 60 are formed between the two flexible sheets 21a and 21b separated from each other. As understood from the above, in the first embodiment, the plurality of reservoir chambers 60 is formed as inner chambers of the sheet portion 20A. Each of the plurality of reservoir chambers 60 is a hollow interior of the corresponding one of the plurality of reservoir portions 58. In the initial state of the collection kit 10A, the plurality of reservoir portions 58 is most contracted (flattened), and the volumes of the plurality of reservoir chambers 60 are zero.

The number of each of the plurality of connection flow paths 52, the plurality of guide paths 54, and the plurality of reservoir portions 58 (the plurality of reservoir chambers 60) is the same as the number of the plurality of storage portions 22. In the illustrated example, the number of the plurality of storage portions 22 is two as described above. Therefore, the plurality of connection flow paths 52 includes a first connection flow path 52a and a second connection flow path 52b. The plurality of guide paths 54 includes the first guide path 54a and the second guide path 54b. The plurality of reservoir portions 58 includes a first reservoir portion 58a and a second reservoir portion 58b, and the plurality of reservoir chambers 60 includes the first reservoir chamber 60a and the second reservoir chamber 60b.

The common flow path 50 extends from the upper side 20b toward the lower side 20a of the collection member 14A so as to divide the collection member 14A into the left part 14L and the right part 14R in the width direction. The first connection flow path 52a (first introduction port 34a), the first storage portion 22a (first storage chamber 24a), the first discharge tube portion 32a (first discharge port 36a), the first guide path 54a, and the first reservoir portion 58a (first reservoir chamber 60a) are located in the left part 14L. The second connection flow path 52b (second introduction port 34b), the second storage portion 22b (second storage chamber 24b), the second discharge tube portion 32b (second discharge port 36b), the second guide path 54b, and the second reservoir portion 58b (second reservoir chamber 60b) are located in the right part 14R. In the illustrated example, the left part 14L and the right part 14R have a positional relationship of line symmetry with an axis C1 of the common flow path 50 as the center of symmetry, but the positional relationship is not particularly limited thereto.

The common flow path 50 has an upstream end 50u and a downstream end 50d. The downstream end 12d of the inflow tube 12 is connected to the upstream end 50u of the common flow path 50 via the inflow port 16 described above.

The downstream end 50d of the common flow path 50 is located at the lower side 20a of the sheet portion 20A. The first connection flow path 52a and the second connection flow path 52b branch from the downstream end 50d of the common flow path 50. In the illustrated example, the intersection angle α between the common flow path 50 and the first connection flow path 52a is approximately 90°, and the intersection angle β between the common flow path 50 and the second connection flow path 52b is also approximately 90°. Each of the intersection angle α and the intersection angle β may be an acute angle or an obtuse angle.

As described above, the first introduction tube portion 30a is connected to the first connection flow path 52a via the first introduction port 34a. The inner hole of the first introduction tube portion 30a communicates with the first storage chamber 24a via the first outflow path 40a of the first outflow tube portion 38a. Alternatively, the inner hole of the first introduction tube portion 30a may directly communicate with the first storage chamber 24a. The second introduction tube portion 30b is connected to the second connection flow path 52b via the second introduction port 34b. The inner hole of the second introduction tube portion 30b communicates with the second storage chamber 24b via the second outflow path 40b of the second outflow tube portion 38b. Alternatively, the inner hole of the second introduction tube portion 30b may directly communicate with the second storage chamber 24b.

In the illustrated example, the first reservoir portion 58a and the second reservoir portion 58b are placed side-by-side with the first storage portion 22a and the second storage portion 22b, respectively, on the outside in the width direction. Alternatively, the first reservoir portion 58a and the second reservoir portion 58b may be placed above the first storage portion 22a and the second storage portion 22b, respectively.

In the illustrated example, the first reservoir portion 58a and the second reservoir portion 58b have a vertical rectangle shape. The first reservoir portion 58a and the second reservoir portion 58b may have a polygonal shape other than a rectangle, an ellipse shape, or a perfect circle shape.

The first guide path 54a is a flow path having a U-shape open at the bottom in an upper section of the left part 14L. The upstream end of the first guide path 54a is connected to the upper part of the first storage chamber 24a via the first discharge port 36a and the inner hole of the first discharge tube portion 32a. The downstream end of the first guide path 54a is connected to the upper part of the first reservoir chamber 60a. Therefore, the first storage chamber 24a communicates with the first reservoir chamber 60a via the first discharge port 36a, the inner hole of the first discharge tube portion 32a, and the first guide path 54a.

The second guide path 54b is a flow path having, for example, a U-shape open at the bottom in an upper section of the right part 14R. The upstream end of the second guide path 54b is connected to the upper part of the second storage chamber 24b via the second discharge port 36b and the inner hole of the second discharge tube portion 32b. The downstream end of the second guide path 54b is connected to the upper part of the second reservoir chamber 60b. Therefore, the second storage chamber 24b communicates with the second reservoir chamber 60b via the second discharge port 36b, the inner hole of the second discharge tube portion 32b, and the second guide path 54b. As will be described later, the first guide path 54a and the second guide path 54b guide air previously stored in the first storage chamber 24a and the second storage chamber 24b toward the first reservoir chamber 60a and the second reservoir chamber 60b, respectively, in the initial state of the collection kit 10A before being used.

Therefore, the first reservoir chamber 60a has a volume equal to or larger than the sum of a half of the volume of the inflow tube 12, a half of the volume of the common flow path 50, the volume of the first introduction tube portion 30a, the volume of the first storage chamber 24a, and the volume of the first guide path 54a. The second reservoir chamber 60b has a volume equal to or larger than the sum of a half of the volume of the inflow tube 12, a half of the volume of the common flow path 50, the volume of the second introduction tube portion 30b, the volume of the second storage chamber 24b, and the volume of the second guide path 54b.

An exhaust flow path open to the atmosphere is not connected to the sheet portion 20A. That is, each of the first reservoir chamber 60a and the second reservoir chamber 60b is not opened to the atmosphere via the exhaust flow path.

The collection kit 10A includes a backflow prevention unit 70 provided in each of the first guide path 54a and the second guide path 54b. In one aspect, the backflow prevention unit 70 includes a hydrophilic filter 72 disposed inside each of the first guide path 54a and the second guide path 54b. Before the pores of the hydrophilic filter 72 are closed, the hydrophilic filter 72 allows passage of air from the first guide path 54a and the second guide path 54b to the first reservoir chamber 60a and the second reservoir chamber 60b, respectively. Thereafter, when the platelet product M flows through the first guide path 54a and the second guide path 54b and comes into contact with the hydrophilic filter 72, the pores of the hydrophilic filter 72 are closed by the platelet product M because the main component of the platelet product M is water. Based on the pore closure, the hydrophilic filter 72 is in a state capable of blocking the passage of air and the platelet product M. Therefore, the air is prevented from flowing back from the first reservoir chamber 60a and the second reservoir chamber 60b toward the first storage chamber 24a and the second storage chamber 24b.

In another aspect, the backflow prevention unit 70 includes a clamp 74 disposed outside each of the first guide path 54a and the second guide path 54b. The clamp 74 squeezes the first guide path 54a and the second guide path 54b from the outside. The tip of the clamp 74 is inserted into a slit 76.

The collection kit 10A includes an adapter 80 connected to the collection member 14A. The number of adapters 80 is equal to the number of outflow paths 40. In the illustrated example, the first storage portion 22a has the first outflow path 40a and the second storage portion 22b has the second outflow path 40b, so that the collection kit 10A includes a first adapter 80a and a second adapter 80b as the adapter 80.

The first adapter 80a is connected to the first outflow tube portion 38a via the first outflow port 78a. The first outflow port 78a has a breakable plug (not illustrated) therein. In the initial state, the plug seals the first outflow path 40a. This prevents the platelet product M from flowing from the first storage chamber 24a to the first adapter 80a. As described later, when the platelet product M is transferred from the first storage chamber 24a to the first adapter 80a, the plug is broken by being bent. As a result, the first outflow port 78a is opened.

As illustrated in Figs. 1 and 4, the first adapter 80a includes a housing cylinder 82 capable of housing a neck part of the first sampling container 110a, a communication tube portion 84 provided at an upper end of the housing cylinder 82, a tubular needle 86 disposed inside the housing cylinder 82, and a rubber cover 88 covering the needle 86. The housing cylinder 82 has an openable and closable lid 90. A release sheet may be adopted instead of the lid 90.

The needle 86 in the housing cylinder 82 is connected to the communication tube portion 84. When the neck part of the first sampling container 110a (see Fig. 4) is inserted into the housing cylinder 82, the needle 86 penetrates a stopper 112 of the first sampling container 110a. Therefore, the plug is broken and the first outflow port 78a is opened, by which the first sampling container 110a and the first storage chamber 24a communicate with each other via the communication tube portion 84 and the needle 86.

When the stopper 112 of the first sampling container 110a is punctured with the needle 86, the rubber cover 88 is compressed by being pushed toward the collection member 14A. The needle 86 penetrates the compressed rubber cover 88. When the needle 86 comes out of the stopper 112 of the first sampling container 110a, the rubber cover 88 extends by elastic restoring force to cover the needle 86 again.

The second adapter 80b has the same configuration as the first adapter 80a. When the needle 86 of the second adapter 80b penetrates a stopper 112 of the second sampling container 110b and the plug is broken to open the second outflow port 78b, the second sampling container 110b and the second storage chamber 24b communicate with each other.

In a case where the collection member 14A has three or more storage chambers 24, the collection kit 10A has three or more outflow paths 40 and three or more adapters 80 corresponding to the storage chambers 24.

In the initial state of the collection kit 10A, the collection kit 10A may not be provided with the first adapter 80a and the second adapter 80b. In this case, when the collection kit 10A is used, the first adapter 80a and the second adapter 80b are connected to the collection kit 10A. For example, the first adapter 80a has an engagement tab and a connection needle, and the first outflow path 40a is provided with an engagement groove and the stopper 112 at the lower part thereof. The connection needle is inserted into the stopper 112, and the engagement tab engages with the engagement groove, whereby the first adapter 80a and the first outflow path 40a are connected. The second adapter 80b also has a connection structure similar to that of the first adapter 80a.

The collection kit 10A according to the first embodiment is basically configured as described above. Next, a collection method for dispensing the platelet product M into the first sampling container 110a and the second sampling container 110b using the collection kit 10A will be described.

First, as illustrated in Fig. 3, the operator connects the medical bag 100 containing the platelet product M to the inflow tube 12. Specifically, the medical bag 100 has a supply tube 102. The operator joins the supply tube 102 to the upstream end 12u of the inflow tube 12. At this time, the supply tube 102 is joined to the inflow tube 12 without coming into contact with outside air using a sterile connecting device.

Next, the operator transfers the platelet product M to the first storage chamber 24a and the second storage chamber 24b. In this step, the medical bag 100 is placed above the collection member 14A. At this time point, the plugs of the first outflow port 78a and the second outflow port 78b are maintained in the closed state.

The platelet product M flows out of the medical bag 100 by gravity and flows into the common flow path 50 through the supply tube 102 and the inflow tube 12. The platelet product M further moves toward the lower side 20a of the sheet portion 20A along the common flow path 50. The first connection flow path 52a and the second connection flow path 52b are connected to the downstream end 50d of the common flow path 50. Therefore, the platelet product M is divided into a first branch MF1 flowing from the common flow path 50 into the first connection flow path 52a and a second branch MF2 flowing from the common flow path 50 into the second connection flow path 52b.

After temporarily flowing into the first outflow path 40a, the first branch MF1 flows into the first storage chamber 24a because the first outflow port 78a is closed by the plug. Therefore, at least a part of the air in the first outflow path 40a is pushed out by the first branch MF1 and moves to the first storage chamber 24a. As a result, the air remaining in the first outflow path 40a is reduced.

When the first branch MF1 further flows into the first storage chamber 24a, the liquid level of the platelet product M rises in the first storage chamber 24a. Accordingly, the air in the first storage chamber 24a is pushed by the platelet product M and rises in the first storage chamber 24a. The air flows through the inner hole of the first discharge tube portion 32a connected to the upper part of the first storage portion 22a, the first discharge port 36a, and the first guide path 54a of the sheet portion 20A, and flows into the first reservoir chamber 60a. The first reservoir chamber 60a is not open to the atmosphere, so that the air is stored in the first reservoir chamber 60a.

The flexible sheets 21a and 21b forming the first reservoir portion 58a are made of materials that can expand in response to the movement of air from the first storage portion 22a to the first reservoir chamber 60a. Therefore, the first reservoir portion 58a expands as the air moves. Accordingly, the first reservoir chamber 60a can receive air.

After the first storage chamber 24a is filled with the platelet product M, the platelet product M flows into the first guide path 54a through the first discharge port 36a and the inner hole of the first discharge tube portion 32a. In the configuration in which the backflow prevention unit 70 includes the hydrophilic filter 72, when the platelet product M comes into contact with the hydrophilic filter 72 disposed inside the first guide path 54a, the platelet product M is captured by the pores of the hydrophilic filter 72. Thus, the platelet product M is held by the hydrophilic filter 72. As a result, the hydrophilic filter 72 is blocked, and the platelet product M is prevented from passing through the hydrophilic filter 72 and flowing into the first reservoir chamber 60a. At the same time, the air stored in the first reservoir chamber 60a as described above is prevented from passing through the hydrophilic filter 72 and returning to the first storage chamber 24a.

When the backflow prevention unit 70 has the clamp 74, the operator attaches the clamp 74 to the outside of the first guide path 54a after the air stored in the first storage chamber 24a is moved to the first reservoir chamber 60a. The clamp 74 squeezes the first guide path 54a from the outside. As a result, the first reservoir chamber 60a is closed, so that the air in the first reservoir chamber 60a is prevented from returning to the first storage chamber 24a beyond the clamp 74. The tip of the clamp 74 is inserted into the slit 76.

In this manner, the backflow prevention unit 70 can prevent the air stored in the first reservoir chamber 60a from returning to the first storage chamber 24a. Therefore, the platelet product M stored in the first storage chamber 24a is prevented from coming into contact with air. The storage amount of the platelet product M in the first storage chamber 24a is, for example, about 8 mL to 10 mL.

The second branch MF2 flowing into the second outflow path 40b through the second connection flow path 52b is also stored in the second storage chamber 24b in the same manner as described above. As a result, air is stored in the second reservoir chamber 60b. Also in the second guide path 54b, the air stored in the second reservoir chamber 60b is prevented from returning to the second storage chamber 24b by the backflow prevention unit 70. Therefore, the platelet product M stored in the second storage chamber 24b is prevented from coming into contact with air.

For the above reasons, the collection kit 10A does not need an air filter for exhausting air to the outside of the collection member 14A. This simplifies the configuration of the collection member 14A.

Next, the medical bag 100 is separated from the inflow tube 12. In this step, for example, a tube sealer such as a high-frequency sealer or an ultrasonic sealer is used. The tube sealer separates the inflow tube 12 from the supply tube 102 of the medical bag 100, and at the same time, seals the upstream end 12u of the inflow tube 12 by welding. The inflow tube 12 and the supply tube 102 are separated from each other without exposing the flow paths inside the tubes 12 and 102 to the outside air.

The medical bag 100 separated from the collection kit 10A is stored until the examination is completed. On the other hand, the collection kit 10A storing the platelet product M in the first storage chamber 24a and the second storage chamber 24b is carried into the clean bench.

Next, a step of blocking communication between the common flow path 50 and the first and second connection flow paths 52a and 52b and a step of respectively connecting the first sampling container 110a and the second sampling container 110b to the first outflow port 78a and the second outflow port 78b via the first adapter 80a and the second adapter 80b are performed. Both steps can be performed in any order. That is, either step may be performed first.

The communication between each of the first connection flow path 52a and the second connection flow path 52b and the common flow path 50 can be blocked by, for example, forming a welding seal portion 79 in each of the first connection flow path 52a and the second connection flow path 52b as illustrated in Fig. 4. That is, in this case, the collection member 14A is provided with a plurality of (two in the illustrated example) welding seal portions 79. The welding seal portion 79 can be formed by welding the two flexible sheets 21a and 21b by, for example, an ultrasonic sealer or a high-frequency sealer. Instead of the welding seal portion 79, a clamp or clip may be used to block the communication between each of the first connection flow path 52a and the second connection flow path 52b and the common flow path 50.

With this blocking, the first storage chamber 24a and the second storage chamber 24b become independent inner chambers. Therefore, the platelet product M stored in the first storage chamber 24a based on the first branch MF1 does not flow into the second storage chamber 24b or the second outflow path 40b. Similarly, the platelet product M stored in the second storage chamber 24b based on the second branch MF2 does not flow into the first storage chamber 24a or the first outflow path 40a. That is, the movement of the platelet product M between the first storage chamber 24a and the second storage chamber 24b is inhibited.

In order to connect the first sampling container 110a to the first adapter 80a, the lid 90 of the first adapter 80a is opened, and the neck part of the first sampling container 110a is inserted into the housing cylinder 82 as illustrated in Fig. 4. As a result, the needle 86 provided inside the housing cylinder 82 penetrates the stopper 112 of the first sampling container 110a. Similarly, the second sampling container 110b is connected to the second adapter 80b.

Next, the operator transfers the platelet product M in the first storage chamber 24a to the first sampling container 110a, and transfers the platelet product M in the second storage chamber 24b to the second sampling container 110b. In order to perform this operation, the operator performs an operation of bending the plugs of the first outflow port 78a and the second outflow port 78b to break the plugs. Thus, the first outflow port 78a and the second outflow port 78b are opened. The platelet product M in the first storage chamber 24a is sucked out by the negative pressure in the first sampling container 110a, passes through the first outflow path 40a, the first outflow port 78a, and the communication tube portion 84 and the needle 86 of the first adapter 80a, and flows into the first sampling container 110a. Similarly, the platelet product M in the second storage chamber 24b is sucked out by the negative pressure in the second sampling container 110b, passes through the second outflow path 40b, the second outflow port 78b, and the communication tube portion 84 and the needle 86 of the second adapter 80b, and flows into the second sampling container 110b.

As described above, substantially the entire amount of the platelet product M stored in the first storage chamber 24a is transferred to the first sampling container 110a, and substantially the entire amount of the platelet product M stored in the second storage chamber 24b is transferred to the second sampling container 110b. That is, a first sample MS1 is introduced into the first sampling container 110a, and a second sample MS2 is introduced into the second sampling container 110b. Thereafter, the first sampling container 110a is removed from the first adapter 80a, and the second sampling container 110b is removed from the second adapter 80b. Thus, the collection (sampling) of the platelet product M using the collection kit 10A is completed.

Next, a culture test is performed on the first sample MS1 and the second sample MS2. Specifically, the first sample MS1 in the first sampling container 110a is used, for example, for anaerobic culture, and whether or not anaerobic bacteria grow is observed. The second sample MS2 in the second sampling container 110b is used, for example, for aerobic culture, and whether or not aerobic bacteria grow is observed. In both tests, the first sampling container 110a and the second sampling container 110b are used as culture bottles. In a case where the first sample MS1 and the second sample MS2 pass the culture test, the platelet product M in the medical bag 100 from which the first sample MS1 and the second sample MS2 are collected is determined to be a passed product. The passed product is used for patient treatment (blood transfusion and the like).

In the collection of the platelet product M (object of collection) using the collection kit 10A, a jig (collection kit jig) for connecting the collection kit 10A to the first sampling container 110a and the second sampling container 110b may be used. The collection kit jig includes, for example, a kit holding unit that holds the collection kit 10A, a lifting mechanism that vertically displaces the kit holding unit, and a container holding unit that holds the first sampling container 110a and the second sampling container 110b. By lowering the kit holding unit, the collection kit 10A can be connected to the first sampling container 110a and the second sampling container 110b. Instead of the lifting mechanism that displaces the kit holding unit in the vertical direction, a lifting mechanism that lifts and lowers the container holding unit may be provided.

The collection kit 10A according to the first embodiment has the following effects.

As illustrated in Figs. 1 to 4, the collection kit 10A for collecting a platelet product M, which is an object of collection, into a plurality of sampling containers 110 includes an inflow tube 12 to which a medical bag 100 (see Fig. 3) is connected, and a collection member 14A connected downstream of the inflow tube 12.

The collection member 14A has a plurality of storage portions 22, a first outflow port 78a, a second outflow port 78b, a reservoir portion 58, and a guide path 54. The plurality of storage portions 22 has a plurality of storage chambers 24 for storing the platelet product M. The first outflow port 78a and the second outflow port 78b are connected to the first storage chamber 24a and the second storage chamber 24b constituting the plurality of storage chambers 24, respectively, for transferring the platelet product M from the first storage chamber 24a and the second storage chamber 24b to the plurality of sampling containers 110.

The reservoir portion 58 includes a first reservoir portion 58a and a second reservoir portion 58b. A first reservoir chamber 60a of the first reservoir portion 58a is connected to the first storage chamber 24a via a first guide path 54a of the guide path 54. A second reservoir chamber 60b of the second reservoir portion 58b is connected to the second storage chamber 24b via a second guide path 54b of the guide path 54.

When the platelet product M is stored in the first storage chamber 24a and the second storage chamber 24b, air contained in the first storage chamber 24a and the second storage chamber 24b moves to the first reservoir chamber 60a and the second reservoir chamber 60b through the first guide path 54a and the second guide path 54b, respectively. The reservoir portion 58 is made of a material that can expand in response to movement of air, and can receive and store air in the first reservoir chamber 60a and the second reservoir chamber 60b.

Therefore, in the collection member 14A of the collection kit 10A, an air filter for exhausting air to the outside of the collection member 14A is unnecessary. Thus, the configuration of the collection member 14A is simplified.

As illustrated in Figs. 3 and 4, the collection kit 10A includes a backflow prevention unit 70 disposed in the guide path 54. The backflow prevention unit 70 prevents air stored in the reservoir chamber 60 from returning to the plurality of storage chambers 24.

For example, when the platelet product M is transferred from the plurality of storage portions 22 to the plurality of sampling containers 110, air stored in the reservoir chamber 60 is prevented from returning to the plurality of storage portions 22. Therefore, the platelet product M is prevented from coming into contact with air. Accordingly, the platelet product M can be subjected to a culture examination.

In one aspect, the backflow prevention unit 70 includes a hydrophilic filter 72 disposed inside the guide path 54.

The hydrophilic filter 72 allows passage of air before being wetted with the platelet product M that is a liquid, and blocks passage of air after being wetted with the platelet product M. Therefore, this configuration can prevent the air stored in the reservoir portion 58 from returning to the plurality of storage chambers 24 through the hydrophilic filter 72 due to the platelet product M overflowing from the plurality of storage chambers 24 and wetting the hydrophilic filter 72.

In another aspect, the backflow prevention unit 70 includes a clamp 74 that squeezes the guide path 54 from the outside.

In this case, the clamp 74 is only attached to the collection member 14A, whereby the configuration of the collection kit 10A is simplified.

The collection kit 10A includes a first adapter 80a and a second adapter 80b connected downstream of the first outflow port 78a and the second outflow port 78b, respectively.

By means of the first adapter 80a and the second adapter 80b, it is easy to connect the first storage chamber 24a and the second storage chamber 24b to the first sampling container 110a and the second sampling container 110b via the first outflow port 78a and the second outflow port 78b, respectively. In addition, since the collection kit 10A in the initial state (before being used) includes the first adapter 80a and the second adapter 80b, it is possible to save time and effort for an operator to connect the first adapter 80a and the second adapter 80b to the first outflow port 78a and the second outflow port 78b one by one when using the collection kit 10A. As a result, efficient collection operation can be achieved.

The above effects can be similarly obtained in a second embodiment and a third embodiment described later.

The collection kit 10A according to the first embodiment has the following specific effects.

As illustrated in Fig. 2, the collection member 14A includes a sheet portion 20A formed by stacking and welding two flexible sheets 21a and 21b. The reservoir chamber 60 is formed as an inner chamber of the sheet portion 20A. On the other hand, each of the plurality of storage portions 22 is formed of an inflexible material. The plurality of storage portions 22 is supported by the sheet portion 20A.

Note that "the storage portion 22 exhibits inflexibility" means that the storage portion 22 has rigidity to such an extent that the storage portion 22 is not substantially deformed when the platelet product M (object of collection) flows into the storage chamber 24 and when the platelet product M flows out from the storage chamber 24 to the sampling container 110.

Therefore, according to the above configuration, when air is discharged from the storage chamber 24 to the reservoir chamber 60, deformation of the plurality of storage portions 22 is suppressed. Thus, substantially the same amount of platelet product M is transferred from the medical bag 100 (see Fig. 3) to each of the storage chambers 24. That is, the storage amount of the platelet product M in the storage chamber 24 is made constant. Therefore, the sampling amount of the platelet product M collected in the sampling container 110 is stabilized.

A suitable material of each of the plurality of storage portions 22 is resin. The resin is relatively hard and lightweight.

The collection member 14A has a plurality of reservoir portions 58, and the reservoir chambers 60 of the plurality of reservoir portions 58 are connected to the plurality of storage chambers 24, respectively. In the illustrated example, the plurality of reservoir portions 58 includes a first reservoir portion 58a and a second reservoir portion 58b, and the first reservoir chamber 60a of the first reservoir portion 58a is connected to the first storage chamber 24a of the first storage portion 22a. The second reservoir chamber 60b of the second reservoir portion 58b is connected to the second storage chamber 24b of the second storage portion 22b.

The air received by the first reservoir chamber 60a is only the air exhausted from the first storage chamber 24a, and the air received by the second reservoir chamber 60b is only the air exhausted from the second storage chamber 24b. Therefore, the volume of each of the first reservoir chamber 60a and the second reservoir chamber 60b can be reduced. Accordingly, it is possible to reduce the size of each of the first reservoir portion 58a and the second reservoir portion 58b.

Next, the collection kit 10B according to the second embodiment will be described with reference to Fig. 5. Note that the same components as those illustrated in Figs. 1 to 4 are denoted by the same reference numerals, and the detailed description thereof may be omitted.

Fig. 5 is a schematic front view of the collection kit 10B according to the second embodiment. The collection kit 10B includes an inflow tube 12 and a collection member 14B.

The collection member 14B includes a sheet portion 20B. As in the first embodiment, the sheet portion 20B is formed of two flexible sheets 21a and 21b stacked in the thickness direction. The two flexible sheets 21a and 21b are stacked and partially welded.

In the unwelded section of the two flexible sheets 21a and 21b, a common flow path 50, a plurality of connection flow paths 52, a plurality of storage chambers 150, a plurality of outflow paths 152, a plurality of guide paths 154, and a plurality of reservoir chambers 156 are formed between the two flexible sheets 21a and 21b separated from each other. As understood from the above, in the second embodiment, the plurality of storage chambers 150 and the plurality of reservoir chambers 156 are formed as inner chambers of the sheet portion 20B. The sheet portion 20B includes a plurality of storage portions 160 having a plurality of storage chambers 150 and a plurality of reservoir portions 162 having a plurality of reservoir chambers 156.

In the illustrated example, the number of the plurality of storage portions 160 is two. That is, the plurality of storage portions 160 includes a first storage portion 160a and a second storage portion 160b. The storage chamber included in the first storage portion 160a is a first storage chamber 150a, and the storage chamber included in the second storage portion 160b is a second storage chamber 150b. However, the number of the plurality of storage portions 160 may be three or more. The first storage portion 160a and the second storage portion 160b have, for example, a hexagonal shape extending along the vertical direction. The first storage portion 160a and the second storage portion 160b may have a polygonal shape other than a hexagon, a perfect circle shape, or an ellipse shape.

The number of each of the plurality of connection flow paths 52, the plurality of outflow paths 152, the plurality of guide paths 154, and the plurality of reservoir portions 162 (the plurality of reservoir chambers 156) is the same as the number of the plurality of storage portions 160. Therefore, the plurality of connection flow paths 52 includes a first connection flow path 52a and a second connection flow path 52b, and the plurality of outflow paths 152 includes a first outflow path 152a and a second outflow path 152b. The plurality of guide paths 154 includes a first guide path 154a and a second guide path 154b. The plurality of reservoir portions 162 includes a first reservoir portion 162a and a second reservoir portion 162b, and the plurality of reservoir chambers 156 includes a first reservoir chamber 156a and a second reservoir chamber 156b.

A downstream end 50d of the common flow path 50 is located near a lower side 20a of the sheet portion 20B. The first connection flow path 52a and the second connection flow path 52b branch from the downstream end 50d of the common flow path 50. In the illustrated example, the intersection angle γ between the common flow path 50 and the first connection flow path 52a and the intersection angle θ between the common flow path 50 and the second connection flow path 52b are acute angles. The intersection angle γ and the intersection angle θ may be right angles or obtuse angles.

A left part 14L of the collection member 14B will be described. The first outflow path 152a is connected to the lowermost part of the first storage chamber 150a. The first connection flow path 52a is connected to a section of the first outflow path 152a close to the first storage chamber 150a. Therefore, the first connection flow path 52a is connected below the first storage chamber 150a via the first outflow path 152a. Thus, the first storage chamber 150a communicates with the common flow path 50 via the first outflow path 152a and the first connection flow path 52a. The downstream end of the first connection flow path 52a may be connected to the lower part of the first storage chamber 150a. In this case, the first storage chamber 150a communicates with the common flow path 50 only via the first connection flow path 52a.

In the illustrated example, the shape of the first reservoir portion 162a is rectangular (quadrilateral with four right angles). The first reservoir portion 162a may have a polygonal shape other than a rectangle, a perfect circle shape, or an ellipse shape. In the second embodiment, the first reservoir portion 162a is disposed above the first storage portion 160a. The first storage portion 160a and the first reservoir portion 162a are aligned in the vertical direction in the sheet portion 20B. Therefore, the first guide path 154a linearly extends along the vertical direction. An upstream end of the first guide path 154a is connected to the uppermost part of the first storage chamber 150a. A downstream end of the first guide path 154a is connected to the lowermost part of the first reservoir chamber 156a. The first storage chamber 150a communicates with the first reservoir chamber 156a via the first guide path 154a.

Therefore, the first reservoir chamber 156a has a volume equal to or larger than the sum of a half of the volume of the inflow tube 12, a half of the volume of the common flow path 50, the volume of the first connection flow path 52a, the volume of the first storage chamber 150a, and the volume of the first guide path 154a. The second reservoir chamber 156b has a volume equal to or larger than the sum of a half of the volume of the inflow tube 12, a half of the volume of the common flow path 50, the volume of the second connection flow path 52b, the volume of the second storage chamber 150b, and the volume of the second guide path 154b.

The first reservoir portion 162a and the first storage portion 160a may be arranged in the width direction as in the first embodiment. In this case, the shape of the first guide path 154a is preferably a U-shape as in the first embodiment.

The collection kit 10B includes a backflow prevention unit 70. In one aspect, the backflow prevention unit 70 includes a hydrophilic filter 72 disposed inside the first guide path 154a. In another aspect, the backflow prevention unit 70 includes a clamp 74 that squeezes the first guide path 154a from the outside.

The collection kit 10B further includes a first adapter 80a. The first adapter 80a is connected to the collection member 14B via a first outflow port 78a. When a plug provided inside the first outflow port 78a is broken, the first outflow port 78a is opened, and the first outflow path 152a and a communication tube portion 84 communicate with each other.

A right part 14R of the collection member 14B is configured similarly to the left part 14L. Therefore, the detailed description of the second connection flow path 52b, the second storage chamber 150b, the second outflow path 152b, the second guide path 154b, the second reservoir chamber 156b, the backflow prevention unit 70 provided in the second guide path 154b, and a second adapter 80b is omitted.

In this configuration, a medical bag 100 is also connected to the inflow tube 12 in the same manner as in Fig. 3. When a platelet product M is transferred from the medical bag 100 to the first storage chamber 150a (see Fig. 5) and the second storage chamber 150b, air in the first storage chamber 150a moves to the first reservoir chamber 156a through the first guide path 154a. Similarly, air in the second storage chamber 150b moves to the second reservoir chamber 156b through the second guide path 154b. The air is stored in the first reservoir chamber 156a and the second reservoir chamber 156b.

Thereafter, as in the first embodiment, a first sampling container 110a is attached to the first adapter 80a, and a second sampling container 110b is attached to the second adapter 80b (see Fig. 4). Then, the plugs in the first outflow port 78a and the second outflow port 78b are broken. Further, as illustrated in Fig. 5, the platelet product M is transferred from the first storage chamber 150a and the second storage chamber 150b to the first sampling container 110a and the second sampling container 110b, respectively, in a state where the air is prevented from returning from the first reservoir chamber 156a and the second reservoir chamber 156b to the first storage chamber 150a and the second storage chamber 150b by the backflow prevention unit 70.

The collection kit 10B according to the second embodiment has the following specific effects.

In the collection kit 10B, the collection member 14B has a sheet portion 20B formed by stacking and welding two flexible sheets 21a and 21b. The sheet portion 20B includes a plurality of storage portions 160. A plurality of storage chambers 150 and reservoir chambers 156 are individually formed as inner chambers of the sheet portion 20B.

When the sheet portion 20B is formed from the two flexible sheets 21a and 21b, the plurality of storage chambers 150 and the reservoir chambers 156 can be simultaneously formed. Therefore, the work of manufacturing the plurality of storage portions 160 is simplified. Further, since the materials of the sheet portion 20B forming the reservoir portion 162 and the plurality of storage portions 160 are the flexible sheets 21a and 21b, the material cost can be reduced.

Next, the collection kit 10C according to the third embodiment will be described with reference to Fig. 6. Note that the same components as those illustrated in Figs. 1 to 5 are denoted by the same reference numerals, and the detailed description thereof may be omitted.

The collection kit 10C includes an inflow tube 12 and a collection member 14C.

The collection member 14C includes a sheet portion 20C. As in the first and second embodiments, the sheet portion 20C is formed of two flexible sheets 21a and 21b stacked in the thickness direction. The two flexible sheets 21a and 21b are stacked and partially welded.

In the unwelded section of the two flexible sheets 21a and 21b, an inflow path 180, a plurality of storage chambers 190, a communication flow path 182, a plurality of outflow paths 184, a guide path 194, and a reservoir chamber 196 are formed between the two flexible sheets 21a and 21b separated from each other. The sheet portion 20C includes a plurality of storage portions 192 having a plurality of storage chambers 190 and a reservoir portion 198 having a reservoir chamber 196.

The plurality of storage chambers 190 includes a first storage chamber 190a and a second storage chamber 190b, and the plurality of storage portions 192 includes a first storage portion 192a and a second storage portion 192b. The plurality of outflow paths 184 includes a first outflow path 184a and a second outflow path 184b. The collection member 14C may have three or more storage chambers and three or more outflow paths.

The sheet portion 20C has a first region 200 including the first storage portion 192a and a second region 202 including the second storage portion 192b. The first region 200 has a rectangular shape having a smaller area than the second region 202 when viewed in the thickness direction of the collection member 14C. The sheet portion 20C further includes a connection region 204 that connects the first region 200 and the second region 202.

The connection region 204 extends in the width direction to integrally connect the first region 200 and the second region 202. The sheet portion 20C has a pair of cutouts 206 obtained by cutting out the sheet portion 20C in a rectangular shape on the upper side and the lower side of the connection region 204. The connection region 204 is formed between the upper and lower cutouts 206. Although not particularly limited, the connection region 204 is located at the center of the first region 200 and the second region 202 in the vertical direction.

The first region 200 includes the inflow path 180, the first storage portion 192a (first storage chamber 190a), the first outflow path 184a, and an upstream part 182u of the communication flow path 182. The inflow path 180 connects the inflow tube 12 and the first storage chamber 190a. The inflow path 180 is connected to the upper end of the first storage chamber 190a. The first outflow path 184a is connected to the lower end of the first storage chamber 190a. The first outflow path 184a extends downward from the lower end of the first storage chamber 190a.

The second region 202 includes a downstream part 182d of the communication flow path 182, the second storage portion 192b (second storage chamber 190b), the second outflow path 184b, the guide path 194, and the reservoir chamber 196. The second outflow path 184b is connected to the lower end of the second storage chamber 190b. The second outflow path 184b extends downward from the lower end of the second storage chamber 190b. The volume of the second storage chamber 190b may be the same as or different from the volume of the first storage chamber 190a.

The communication flow path 182 is a flow path that connects the first storage portion 192a and the second storage portion 192b to allow communication between the first storage chamber 190a and the second storage chamber 190b. The communication flow path 182 includes the upstream part 182u, a midstream part 182m, and the downstream part 182d. The upstream part 182u is connected to an upper part of the first storage chamber 190a facing the connection region 204. The upstream part 182u of the communication flow path 182 has a V-shape that extends obliquely upward from the first storage chamber 190a and is curved so as to extend downward.

The midstream part 182m of the communication flow path 182 extends along the connection region 204 of the sheet portion 20C and is connected to the downstream part 182d in the second region 202. The downstream part 182d has a V-shape that extends downward and is curved so as to extend obliquely upward toward the second storage chamber 190b. The downstream part 182d is connected to a lower part of the second storage chamber 190b facing the connection region 204.

In the illustrated example, the shape of the reservoir portion 198 is rectangular (quadrilateral with four right angles). The reservoir portion 198 may have a polygonal shape other than a rectangle, a perfect circle shape, or an ellipse shape. In the third embodiment, the reservoir portion 198 is disposed above the second storage portion 192b. The second storage portion 192b and the reservoir portion 198 are arranged in the vertical direction in the second region 202. Therefore, the guide path 194 linearly extends along the vertical direction. The upstream end of the guide path 194 is connected to the uppermost part of the second storage chamber 190b. The downstream end of the guide path 194 is connected to the lowermost part of the reservoir chamber 196. The second storage chamber 190b communicates with the reservoir chamber 196 via the guide path 194. The first storage chamber 190a communicates with the reservoir chamber 196 via the communication flow path 182, the second storage chamber 190b, and the guide path 194.

Therefore, the reservoir chamber 196 has a volume equal to or larger than the sum of the volume of the inflow tube 12, the volume of the inflow path 180, the volume of the first storage chamber 190a, the volume of the communication flow path 182, the volume of the second storage chamber 190b, and the volume of the guide path 194.

As in Figs. 1 to 4, the reservoir portion 198 and the second storage portion 192b may be arranged in the width direction. In this case, the shape of the guide path 194 is preferably a U-shape as in the first embodiment.

The collection kit 10C includes a backflow prevention unit 70. In one aspect, the backflow prevention unit 70 includes a hydrophilic filter 72 disposed inside the guide path 194. In another aspect, the backflow prevention unit 70 includes a clamp 74 that squeezes the guide path 194 from the outside.

The collection kit 10C further includes a first adapter 80a and a second adapter 80b. The first adapter 80a is connected to the collection member 14C via the first outflow port 78a. When a plug provided inside the first outflow port 78a is broken, the first outflow port 78a is opened, and the first outflow path 184a and a communication tube portion 84 in the first adapter 80a communicate with each other. The second adapter 80b is connected to the collection member 14C via the second outflow port 78b. When a plug provided inside the second outflow port 78b is broken, the second outflow port 78b is opened, and the second outflow path 184b and the communication tube portion 84 in the second adapter 80b communicate with each other.

In this configuration, a medical bag 100 is also connected to the inflow tube 12 in the same manner as in Fig. 3. When a platelet product M is transferred from the medical bag 100 to the first storage chamber 190a (see Fig. 6) and the second storage chamber 190b, the platelet product M flows into the second storage chamber 190b through the first storage chamber 190a and the communication flow path 182. Accordingly, air in the first storage chamber 190a moves to the second storage chamber 190b through the communication flow path 182, and air in the second storage chamber 190b moves to the reservoir chamber 196 through the guide path 194. The air is stored in the reservoir chamber 196.

As described above, even when the number of the reservoir chambers 196 is smaller than the number of the storage chambers 190, all the air in the plurality of storage chambers 190 can be stored in the reservoir chamber 196 by arranging the plurality of storage chambers 190 from the upstream side to the downstream side in the flowing direction of the platelet product M, and connecting the reservoir chamber 196 to the storage chamber 190 (the second storage chamber 190b in the illustrated example) located most downstream.

Thereafter, as in the first embodiment, a first sampling container 110a is attached to the first adapter 80a, and a second sampling container 110b is attached to the second adapter 80b (see Fig. 4). Then, the plugs in the first outflow port 78a and the second outflow port 78b are broken. Further, as illustrated in Fig. 6, the platelet product M is transferred from the first storage chamber 190a and the second storage chamber 190b to the first sampling container 110a and the second sampling container 110b, respectively, in a state where the air is prevented from returning from the reservoir chamber 196 to the second storage chamber 190b by the backflow prevention unit 70.

The collection kit 10C according to the third embodiment has the following specific effects.

The plurality of storage portions 192 is arranged from the upstream side to the downstream side in the flowing direction of the platelet product M. In this configuration, the reservoir chamber 196 is connected to the storage chamber 190 of the storage portion 192 positioned most downstream (the second storage chamber 190b of the second storage portion 192b).

This makes it sufficient to form only one guide path 194 and only one reservoir chamber 196 in the collection member 14C. Therefore, the configuration of the collection member 14C is simplified.

Modifications that can be adopted in the first to third embodiments will be described.

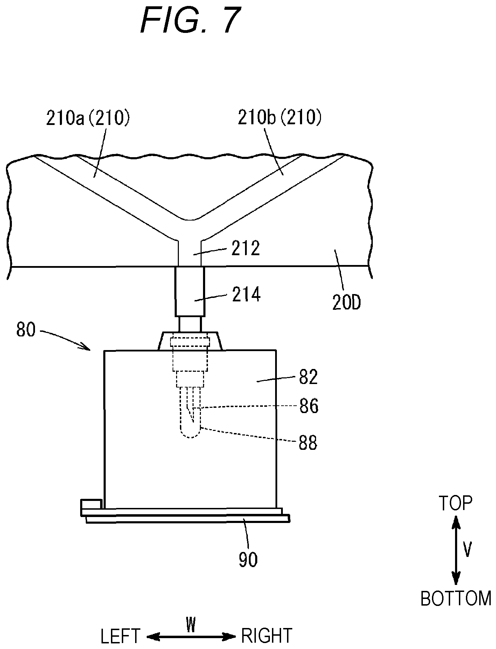

In the first to third embodiments, an outflow port is connected to each of the plurality of storage chambers 24, 150, and 190. That is, the number of storage chambers 24, 150, and 190 is the same as the number of outflow ports. However, as illustrated in Fig. 7, a confluence outflow path 212 may be formed in a sheet portion 20D, and one outflow port 214 may be connected to the sheet portion 20D. Specifically, a first outflow path 210a is connected to one of a plurality of storage chambers, and a second outflow path 210b is connected to another one of the plurality of storage chambers. Further, the first outflow path 210a and the second outflow path 210b are merged with the confluence outflow path 212. The confluence outflow path 212 and one adapter 80 are connected via the outflow port 214.

Next, the platelet product M is transferred from the storage chambers 24, 150, and 190 to a sampling container (not illustrated) attached to the adapter 80. After a prescribed amount of the platelet product M is transferred to the sampling container, the operator removes the sampling container from the adapter 80. Next, the operator attaches another sampling container (not illustrated) to the adapter 80 and transfers the platelet product M from the storage chambers 24, 150, and 190 to the sampling container. The above operation is repeated, as necessary. As described above, the platelet product M can be dispensed into a plurality of sampling containers.

In this case, the number of outflow ports 214 and adapters 80 is reduced as compared with the configurations illustrated in Figs. 1 to 6. Therefore, the collection kit can be simplified.

Note that the present invention is not limited to the above disclosure and can take various configurations without departing from the gist of the present invention.

## Claims

1. A collection kit for collecting an object of collection contained in a medical bag into a plurality of sampling containers, the collection kit comprising:
an inflow tube to which the medical bag is connected; and
a collection member connected downstream of the inflow tube, wherein
the collection member includes
a plurality of storage portions including a plurality of storage chambers for storing the object of collection,
at least one outflow port connected to the plurality of storage chambers for transferring the object of collection to the plurality of sampling containers from the plurality of storage portions, and
a reservoir portion connected to at least one of the plurality of storage portions via a guide path and including a reservoir chamber that stores air moved from the plurality of storage portions when the object of collection is stored in the plurality of storage portions, and
the reservoir portion is made of a material expandable in response to the movement of the air from the plurality of storage portions.

2. The collection kit according to claim 1, further comprising a backflow prevention unit that is disposed in the guide path and prevents the air stored in the reservoir chamber from returning to the plurality of storage chambers.

3. The collection kit according to claim 2, wherein the backflow prevention unit includes a hydrophilic filter disposed inside the guide path.

4. The collection kit according to claim 2, wherein the backflow prevention unit includes a clamp that squeezes the guide path from outside.

5. The collection kit according to claim 1, wherein
the collection member includes a sheet portion formed by stacking and welding two flexible sheets,
the reservoir chamber is formed as an inner chamber of the sheet portion, and
each of the plurality of storage portions is formed of an inflexible material and supported by the sheet portion.

6. The collection kit according to claim 5, wherein a material of each of the plurality of storage portions is a resin.

7. The collection kit according to claim 1, wherein
the collection member includes a sheet portion formed by stacking and welding two flexible sheets,
the sheet portion includes the plurality of storage portions, and
the plurality of storage chambers and the reservoir chamber are individually formed as inner chambers of the sheet portion.

8. The collection kit according to claim 1, further comprising an adapter connected downstream of the outflow port.

9. The collection kit according to any one of claims 1 to 8, wherein the collection member includes a plurality of the reservoir portions, and the reservoir chambers of the plurality of reservoir portions are connected to the plurality of storage chambers, respectively.

10. The collection kit according to any one of claims 1 to 8, wherein
the plurality of storage portions is arranged from an upstream side to a downstream side in a flowing direction of the object of collection, and
the reservoir chamber is connected to the storage chamber of the storage portion positioned most downstream.
